Europäisches Patentamt

European Patent Office

Office européen des brevets

(19)

(11) **EP 0 528 196 B1**

(12) **EUROPÄISCHE PATENTSCHRIFT**

(45) Veröffentlichungstag und Bekanntmachung des Hinweises auf die Patenterteilung:
**28.02.1996 Patentblatt 1996/09**

(51) Int Cl.⁶: **C08J 5/18**, C08L 33/12, C08L 51/00, B29C 63/02 // (C08L51/00, 33:12, 33:10)

(21) Anmeldenummer: **92112513.4**

(22) Anmeldetag: **22.07.1992**

(54) **Mattierte Polymethacrylat-Folie**

Matted polymethacrylate foil

Feuille mate de polyméthacrylate

(84) Benannte Vertragsstaaten:
**AT BE CH DE DK ES FR GB IT LI NL SE**

(30) Priorität: **03.08.1991 DE 4125857**

(43) Veröffentlichungstag der Anmeldung:
**24.02.1993 Patentblatt 1993/08**

(73) Patentinhaber: **RÖHM GMBH**
**D-64293 Darmstadt (DE)**

(72) Erfinder: **Gross, Heinz, Dr.**
**W-6101 Rossdorf 1 (DE)**

(56) Entgegenhaltungen:
**DE-A- 1 569 160**          **GB-A- 2 226 324**

EP 0 528 196 B1

**Beschreibung**

Gebiet der Erfindung

Die Erfindung betrifft mattierte Polymethacrylat-Folien

Stand der Technik

Zum Schutz von Werkstoffen gegen mechanische Beanspruchung und gegen Witterungseinflüsse hat sich eine Beschichtung derselben mit einer transparenten PMMA-Folie bewährt. Solche Folien weisen eine glatte, hochglänzende Oberfläche auf. Es gibt nun eine Reihe von Anwendungen, für die eine matte, gering reflektierende Oberfläche erwünscht ist.

Matte Oberflächen von thermoplastischen Kunststoff-Substraten, insbesondere von Folien, werden im allgemeinen mit Hilfe einer speziellen Mattwalze oder einer gummierten Walze hergestellt. In JP 90 28 239 wird beispielsweise die Herstellung eines Films oder einer Platte mit matter Oberfläche, bestehend aus Vinylidenfluorid-Harz und Methacrylsäureester-Harz, durch Extrusion und Führung des Extrudats durch eine Prägerolle beschrieben. Solchermaßen hergestellte Folien haben jedoch den Nachteil, daß sie bei geringfügiger Verstreckung, wie sie beispielsweise beim Kaschieren von Folien über Kanten auftritt, bzw. durch das Pressen beim Kaschiervorgang (siehe hierzu Winnacker-Küchler, Bd. 6, S. 471, 4. Aufl., 1982, Carl Hanser Verlag München, Wien) ihre Prägestruktur und damit ihre Mattierung verlieren.

Desweiteren können Matteffekte an der Oberfläche durch Polymermischungen mit einer bestimmten heterogenen Mischphasenmorphologie, welche gegebenenfalls durch weitere Zusätze stabilisiert wird, erzeugt werden. Beispielhaft sei hier EP-A 188 123 angeführt, die Filme, bestehend aus der an sich unverträglichen Polymermischung aus Nylon-6 und Polypropylen, beschreibt, deren Phasenmorphologie durch ein Ethylen-Methylacrylat-Copolymer stabilisiert wird. Gleichermaßen werden in EP-A 348 115 Polyethylen-Filme beschrieben, die als zweite Phase ein Ethylen-Methylmethacrylat-Copolymer enthalten, wobei das Polyethylen als disperse Phase fungiert.

Die Größe der dispergierten Phasen, die durch ihre charakteristische Streuung den Matteffekt ausmachen, ist in solchen Systemen vom thermodynamischen Gleichgewicht in der Polymermischung und damit sehr sensitiv von den Verarbeitungsbedingungen solcher Filme abhängig. So wird es nur sehr schwer möglich sein, bei einem Kaschiervorgang solche mit den Herstellbedingungen vergleichbare thermodynamische und damit thermische Bedingungen einzustellen, die die Größe der dispergierten Phasen unbeeinflußt lassen. Sind diese Phasen aber nicht dimensionsstabil, so resultiert ein ungleichmäßiges Streuverhalten und damit - zumindest stellenweise - der Verlust der Mattierung an der Oberfläche. Dimensionsstabile Mattierungsmittel stellen anorganische Pigmente dar, wie sie beipsielsweise in JP 89 234 427 angeführt werden. Hier wird eine matte Oberfläche auf Polyesterfilmen durch den Zusatz von $CaCO_3$ oder $BaSO_4$ zusammen mit Mikrokugeln aus Acrylpolymeren, wie Polymethylmethacrylat, bei der Extrusion erzeugt. Aufgrund der hohen Brechungsindices der anorganischen Pigmente ist die Transparenz der Filme bedingt durch hohe Streulichtverluste jedoch sehr gering.

Ein weiterer Nachteil ist der Verschleiß der Walzenoberflächen bei der Folienextrusion, hervorgerufen durch die einen Abrieb verursachenden anorganischen Pigmente.

In einer Reihe von Anmeldungen werden daher vernetzte Polymerisatpartikel als Streupigmente eingesetzt, die den Matteffekt erzeugen. So beschreibt JP 84 89 344 einen wetterbeständigen Schutzfilm mit matter Oberfläche, bestehend aus Mischungen von Polymerisaten aus fluorierten ethylenisch ungesättigten Monomeren, einem mehrstufig hergestellten vernetzten (Meth)acrylat-Polymerisat und einem Mattierungsmittel, das aus vernetzten Teilchen mit einem mittleren Durchmesser zwischen 1 - 500 µm, bestehend aus einem Copolymerisat aus (Meth)acrylaten, Vinylaromaten, weiteren $\alpha,\beta$-ungesättigten Verbindungen und Vernetzer, besteht. Eine weitere Ausführungsform wird in US 3 992 486 dargestellt, wobei transluzente (durchscheinende) Platten oder Beschichtungen von variablem Glanz aus Acrylharz als kontinuierlicher Phase mit darin gleichmäßig verteilten Dispersionsteilchen aus vernetzten Styrolcopolymerisaten, die auch Methacryl-Monomere enthalten können, aufgebaut sein können. Diese Dispersionsteilchen entstehen bei der Massepolymerisation von o.g. Styrolcopolymerisaten in Gegenwart von polyfunktionellen ungesättigten Monomeren, wobei die kontinuierliche Acrylharz-Phase zunächst als gelöstes Polymerisat im Monomerengemisch vorliegt. Während der Polymerisation trennen sich die beiden Polymerisat-Phasen, Acrylharz und vernetztes Styrolcopolymerisat, wobei letztgenanntes aufgrund der schlechten Mischbarkeit der Polymerisate, eine kugelförmige Teilchenform mit mittlerem Durchmesser zwischen 0,5 - 30 µm annimmt.

Das Streuvermögen der in den beiden letztgenannten Patentschriften genannten Teilchen beruht einerseits auf deren Größe, andererseits auf der Differenz der Brechungsindices zwischen Teilchen und Matrix. Von Nachteil ist die Unverträglichkeit zwischen Teilchen und Matrix, was zu einer erheblichen Verschlechterung der mechanischen Eigenschaften des Matrixmaterials führt.

Das deutsche Patent DE 15 54 781 hat ein Verfahren zur Herstellung von Formkörpern aus thermoplastischen Kunststoffen mit rautenförmig gemusterter Oberfläche zum Gegenstand, das dadurch gekennzeichnet ist, daß eine Mischung aus zwei thermoplastischen Stoffen mit stark unterschiedlichem Fließverhalten extrudiert wird. Solchermaßen hergestellte Extrudate geringer Dicke, z.B. Folien, können allerdings ein, durch Fließanomalien bei der Extrusion und damit Dickeschwankungen beim Extrudat bedingtes, inhomogenes mechanisches Verhalten aufweisen.

Aufgabe und Lösung

Eine Reihe praktischer Anwendungen, wie beispielsweise der Schutz witterungsempfindlicher Gegenstände, erfordert die Beschichtung solcher Gegenstände mit einer Folie, die neben einem wirksamen Schutz gegen Witterungseinflüsse, wie Feuchtigkeit, Wind und Sonnenlicht, insbesondere Strahlung im UV-Bereich, eine hohe Zähigkeit und eine matte Oberfläche aufweist. Als Aufgabe ergibt sich hieraus die Bereitstellung einer Folie, die neben einer hohen eigenen Witterungsstabilität einen ausreichenden Schutz für witterungsempfindliche Gegenstände gegen oben genannte Witterungseinflüsse bietet. Desweiteren soll die Folie eine hohe Zähigkeit und eine matte Oberfläche aufweisen, um eine hohe Dehnbarkeit und eine geringe Lichtreflexion bei Gegenständen zu ermöglichen, die mit dieser Folie beschichtet sind.

Diese Aufgabe wird durch die erfindungsgemäße Folie gelöst.

Diese ist aufgebaut aus:

99,9 bis 30 Gew.-% einer thermoplastischen Polymerisat-Matrix A bestehend aus:

a1)     10 bis 95 Gew.-% einer zusammenhängenden Hartphase mit einer Glastemperatur über 70 Grad C, aufgebaut aus:

     a11)     80 bis 100 Gew.-% (bezogen auf a1) Methylmethacrylat und
     a12)     0 bis 20 Gew.-% eines oder mehrerer weiterer ethylenisch ungesättigter, radikalisch polymerisierbarer Monomeren und

a2)     90 bis 5 Gew.-% einer in der Hartphase verteilten Zähphase mit einer Glastemperatur unter -10 Grad C, aufgebaut aus

     a21)     50 bis 99,5 Gew.-% (bezogen auf a2) eines $C_1$-$C_{10}$-Alkylacrylats,
     a22)     0,5 bis 5 Gew.-% eines vernetzenden Monomeren und/oder Pfropfvernetzers mit zwei oder mehr ethylenisch ungesättigten, radikalisch polymerisierbaren Resten, und
     a23)     gegebenenfalls weiteren ethylenisch ungesättigten, radikalisch polymerisierbaren Monomeren, wobei wenigstens 15 Gew.-% der Hartphase a1) mit der Zähphase a2) kovalent verknüpft sind, und

0,1 bis 70 Gew.-% in dem thermoplastischen Matrixpolymerisat heterogen verteilte Latexpartikel mit einem mittleren Teilchendurchmesser von 1 bis 150 μm zur Erzeugung des Matteffekts, bestehend aus einem thermoelastischen Polymerisat B, aufgebaut aus:

b1)     50 - 99,5 Gew.-% (bezogen auf B) eines, gegebenenfalls verzweigten oder cyclischen, $C_1$-$C_6$-Alkylmethacrylats
b2)     0,5 bis 10 Gew.-% eines vernetzenden Monomeren mit zwei oder mehr ethylenisch ungesättigten, radikalisch polymerisierbaren Gruppen, und
b3)     gegebenenfalls weiteren ethylenisch ungesättigten, radikalisch polymerisierbaren Monomeren.

Der Unterschied zwischen dem Brechungsindex $n_{D,A}$ des thermoplastischen Matrixpolymerisats A und dem Brechungsindex $n_{D,B}$ der heterogen verteilten Latexpartikel bestehend aus Polymerisat B beträgt maximal $\Delta n_D = 0,02$.

Wirkung der Erfindung

Die Mattierung der Folie wird durch die aus dem thermoelastischen Polymerisat B aufgebauten Latexpartikel mit einem mittleren Teilchendurchmesser von 1 bis 150 μm, bevorzugt 1 bis 10 μm und besonders bevorzugt von 1 bis 5 μm erzeugt. Der Matteffekt wird durch diese Teilchen an der Folienoberfläche erzeugt, wobei sie aus dieser herausragen und damit eine diffuse Lichtstreuung erzeugen, die die Reflektion des Lichts und damit den Glanz deutlich vermindert. Demgegenüber soll die Transparenz der Folie und damit die Lichttransmission möglichst hoch sein. Dies wird durch eine Angleichung des Brechungsindex $n_{D,A}$ des thermoplastischen Matrixpolymerisats an den Brechungsindex $n_{D,B}$ des thermoelastischen Polymerisats B erreicht. Der Unterschied zwischen den Brechungsindices darf maximal $\Delta n_D = n_{D,A} - n_{D,B} \leq 0,02$ betragen. Liegt der Unterschied darüber, wirkt die Kernschicht insgesamt trüb, d.h. die Lichttransmission nimmt ab.

Die Zähigkeit der Folie wird durch den Aufbau der thermoplastischen Polymerisat-Matrix A bewirkt, die eine klare schlagzähe Polymethacrylat-Formmasse darstellt, die unter Wärme- und Feuchtigkeitseinwirkung oder bei Bewitterung weder trüb wird, noch sich verfärbt, und die in der DE-A 38 42 796 beschrieben ist. Die eingelagerten Zähphasenteilchen a2) sind in ihrer Größe und Einheitlichkeit der Größe so gewählt, daß die Transparenz der Folie erhalten bleibt. Überraschend ist, daß die Zähphasenteilchen a2) beim Mischen von Polymerisat A mit Polymerisat B nicht agglomerieren und damit keine Trübung, die durch Lichtstreuung an Agglomeraten hervorgerufen würde, im Polymerisat A erzeugen.

Die Witterungsstabilität der Folie selbst ist durch hohe Acrylat- und/oder Methacrylat-Anteile in den Polymerisaten A und B gewährleistet.

Eine vorteilhafte Ausführungsform stellt eine Folie dar, die neben den o.a. Eigenschaften in der Lage ist, UV-Licht zu absorbieren und die damit einen Schutz für UV-empfindliche Substrate darstellt. Dies wird durch den Einbau polymerisierbarer UV-Absorber und/oder die Einlagerung niedermolekularer UV-Absorber in die verschiedenen Phasen, vor allem in die Hartphase a1) des Polymerisats A gewährleistet.

Von besonderem Vorteil ist, daß die Mattierung der Folie erhalten bleibt, wenn diese auf eine Temperatur im thermoelastischen Zustandsbereich erwärmt wird und danach ohne Einwirkung eines Formwerkzeugs abgekühlt wird. Dies ermöglicht ein Kaschieren der Folie, d.h. ein Aufbringen unter Druck im Spalt eines Walzenpaares auf ein zu schützendes Substrat, ohne Verlust der Mattierung.


Durchführung der Erfindung

Herstellung der Polymerisate A und B

Das thermoplastische Polymerisat A, das bevorzugt zweiphasig ist, wird durch eine zweistufige Emulsionspolymerisation in Wasser erzeugt, wie in DE-A 38 42 796 beschrieben. In der ersten Stufe wird die Zähphase a2) erzeugt, die zu mindestens 50, vorzugsweise zu mehr als 80 Gew.-%, aus niederen Alkylacrylaten aufgebaut ist, woraus sich eine Glastemperatur dieser Phase von unter -10 Grad C ergibt. Als vernetzende Monomere a22) werden (Meth)acrylester von Diolen, wie beispielsweise Ethylenglykoldimethacrylat oder 1,4-Butandioldimethacrylat, aromatische Verbindungen mit zwei Vinyl- oder Allylgruppen, wie beispielsweise Divinylbenzol, oder andere Vernetzer mit zwei ethylenisch ungesättigten, radikalisch polymerisierbaren Resten, wie z.B. Allylmethacrylat als Pfropfvernetzer, eingesetzt. Als Vernetzer mit drei oder mehr ungesättigten, radikalisch polymerisierbaren Gruppen, wie Allylgruppen oder (Meth)acrylgruppen, seien beispielhaft Triallylcyanurat, Trimethylolpropan-triacrylat und -trimethacrylat sowie Pentaerythrit-tetraacrylat und -tetramethacrylat genannt. Weitere Beispiele sind hierzu in US 4 513 118 angegeben.

Die unter a23) genannten ethylenisch ungesättigten, radikalisch polymerisierbaren Monomeren können beispielsweise Acryl- bzw. Methacrylsäure sowie deren Alkylester mit 1 - 20 Kohlenstoffatomen, sofern noch nicht genannt, sein, wobei der Alkylrest linear, verzweigt oder cyclisch sein kann. Desweiteren kann a23) weitere radikalisch polymerisierbare aliphatische Comonomere, die mit den Alkylacrylaten a21) copolymerisierbar sind, umfassen. Jedoch sollen nennenswerte Anteile an aromatischen Comonomeren, wie Styrol, alpha-Methylstyrol oder Vinyltoluol ausgeschlossen bleiben, da sie - vor allem bei Bewitterung - zu unerwünschten Eigenschaften der Formmasse A führen. Bei der Erzeugung der Zähphase in der ersten Stufe muß die Einstellung der Teilchengröße und deren Uneinheitlichkeit genau beachtet werden. Dabei hängt die Teilchengröße der Zähphase im wesentlichen von der Konzentration des Emulgators ab. Teilchen mit einer mittleren Teilchengröße (Gewichtsmittel) unter 130 nm, vorzugsweise unter 70 nm, und mit einer Uneinheitlichkeit $U_{80}$ der Teilchengröße unter 0,5, ($U_{80}$ wird aus einer integralen Betrachtung der Teilchengrößenverteilung, die per Ultrazentrifuge bestimmt wird, ermittelt. Es gilt:

$$U_{80} = \frac{r_{90} - r_{10}}{r_{50}}$$

mit $r_{10,50,90}$ =  mittlerer integraler Teilchenradius für den gilt 10,50,90 % der Teilchenradien liegen unter und 90,50,10 % der Teilchenradien liegen über diesem Wert)

vorzugsweise unter 0,2, werden mit Emulgatorkonzentrationen von 0,15 bis 1,0 Gew.-%, bezogen auf die Wasserphase, erreicht. Dies gilt vor allem für anionische Emulgatoren, wie beispielsweise die besonders bevorzugten alkoxylierten und sulfatierten Paraffine. Als Polymerisationsinitiatoren werden z.B. 0,01 bis 0,5 Gew.-% Alkali- oder Ammoniumperoxodisulfat, bezogen auf die Wasserphase eingesetzt und die Polymerisation wird bei Temperaturen von 20 bis 100 Grad C ausgelöst. Bevorzugt werden Redox-Systeme, beispielsweise eine Kombination aus 0,01 bis 0,05 Gew.-% organischem Hydroperoxid und 0,05 bis 0,15 Gew.-% Natriumhydroxymethylsulfinat , bei Temperaturen von 20 bis 80 Grad C verwendet.

Die mit der Zähphase a2) zumindest zu 15 Gew.-% kovalent verbundene Hartphase a1) weist eine Glastemperatur von wenigstens 70 Grad C auf und kann ausschließlich aus Methylmethacrylat aufgebaut sein. Als Comonomere a12) können bis zu 20 Gew.-% eines oder mehrerer weiterer ethylenisch ungesättigter, radikalisch polymerisierbarer Monomerer in der Hartphase enthalten sein, wobei Alkyl(meth)acrylate, vorzugsweise Alkylacrylate mit 1 bis 4 Kohlenstoffatomen, in solchen Mengen eingesetzt werden, daß die oben genannte Glastemperatur nicht unterschritten wird.

Die Polymerisation der Hartphase a1) verläuft in einer zweiten Stufe ebenfalls in Emulsion unter Verwendung der üblichen Hilfsmittel, wie sie beispielsweise auch zur Polymerisation der Zähphase a2) verwandt werden.

In einer bevorzugten Ausführungsform enthält die Hartphase niedermolekulare und/oder einpolymerisierte UV-Absorber in Mengen von 0,1 bis 10 Gew.-%, bevorzugt 0,5 - 5 Gew.-%, bezogen auf A als Bestandteil der comonomeren Komponente a12) in der Hartphase. Beispielhaft für die polymerisierbaren UV-Absorber, wie sie u.a. in der US 4 576 870 beschrieben sind, seien 2-(2'-Hydroxyphenyl)-5-methacrylamidobenzotriazol oder 2-Hydroxy-4-methacryloxybenzophenon genannt. Niedermolekulare UV-Absorber können beispielsweise Derivate des 2-Hydroxybenzophenons oder des 2-Hydroxyphenylbenzotriazols oder Salicylsäurephenylester sein. Im allgemeinen weisen die niedermolekularen UV-Absorber ein Molekulargewicht von weniger als $2 \times 10^3$ Dalton auf. Besonders bevorzugt sind UV-Absorber mit geringer Flüchtigkeit bei der Verarbeitungstemperatur und homogener Mischbarkeit mit der Hartphase a1) des Polymerisats A.

Die aus Polymerisat B aufgebauten Latexpartikel besitzen eine mittlere Teilchengröße zwischen 1 und 150 µm, bevorzugt zwischen 1 und 10 µm und besonders bevorzugt zwischen 1 und 5 µm. Ihre Herstellung wird in US 4 268 549 beschrieben. Polymerisat B enthält bevorzugt in b1) 75 bis 99,5 Gew.-% einer Mischung bestehend aus Methylmethacrylat und einem niedrigen Alkylmethacrylat im Gewichtsverhältnis 3 : 1 bis 1 : 3, 0,5 bis 10 Gew.-% eines vernetzenden Monomeren b2), wobei die unter a22) (s. oben) beschriebenen Vernetzer zum Einsatz kommen können und gegebenenfalls 0 bis 15 Gew.-% eines weiteren Monomeren b3), wie beispielsweise andere Ester der Acryl- und/oder der Methacrylsäure, Styrol, Acrylnitril und Methacrylnitril, Vinylacetat sowie ähnliche, vorzugsweise nicht oder nur wenig wasserlösliche Monomere.

Es ist vorteilhaft, wenn die aus Polymerisat B aufgebauten Latexteilchen kugelförmig sind. Sie werden zweckmäßig nach dem sogenannten Saatlatex-Verfahren durch Emulsionspolymerisation hergestellt und durch Sprühtrocknung unter Bedingungen, bei denen die Einzelpartikel nicht verschmelzen, zu einem Pulver getrocknet.

Der Unterschied der Brechungsindices von Polymerisat A $n_{D,A}$ und Polymerisat B $n_{D,B}$ darf maximal $n_D < 0,02$ betragen. Wird $n_D$ größer, weisen Gemische aus A und B eine deutliche Trübung auf, die die Lichttransmission auch schon bei Folien mit einer Dicke von bis zu 1 mm deutlich reduziert. Die Bedingung $n_D < 0,02$ wird insbesondere dann erfüllt, wenn die chemische Zusammensetzung der thermoplastischen Hartphase a1) der des Polymerisats B) entspricht oder sehr nahe kommt. Bei großen Unterschieden in der Zusammensetzung zwischen A) und B) bietet sich der Einbau von Comonomeren in A) oder B) an, die in der Lage sind, die Brechungsindices anzugleichen. Voraussetzung hierfür ist aber immer, daß die Polymerisate A) und B) thermodynamisch verträglich sind. Im Falle einer Unverträglichkeit zwischen A) und B) resultiert bei der Extrusion eine Phasenseparation zwischen A) und B) und damit ein schlechtes mechanisches Verhalten bei aus diesen Gemischen hergestellten Folien.

Herstellung der Folie

Vor der Folienextrusion wird das in einer wäßrigen Dispersion vorliegende Polymerisat A zur Formmasse aufgearbeitet. Dazu werden die wasserlöslichen Bestandteile der Dispersion, die mit Feststoffgehalten von 30 bis 60 Gew.-% anfällt, abgetrennt, indem die Dispersion koaguliert, die flüssige Wasserphase vom Koagulat abgetrennt und das Koagulat zu einer Formmasse verschmolzen wird. Hierfür wird zweckmäßig ein Doppelschnecken-Entgasungsextruder, wie in US-A 4 110 843 beschrieben, verwandt. Die aufgeschmolzene Formmasse wird aus dem Extruder ausgetragen und granuliert. Desweiteren kann das Polymerisat A aus der wäßrigen Dispersion durch Sprühtrocknung als Pulver isoliert werden.

Die granulierte Formmasse oder das pulverförmige Sprühgut aus Polymerisat A wird mit den sprühgetrockneten Latexpartikeln aus Polymerisat B mechanisch gemischt, in einen Mischextruder bei 220 - 280 Grad C, vorzugsweise bei 240 Grad C, aufgeschmolzen, ausgetragen und wiederum granuliert. Das Granulat bestehend aus dem thermoplastischen Polymerisat A mit darin eingelagerten, dimensionsstabilen Latexteilchen aus dem thermoelastischen Polymerisat B wird in einem Extruder bei 220 - 280 Grad C, vorzugsweise bei 240 Grad C, aufgeschmolzen durch eine Schlitzdüse mit einem Austrittsschlitz von 0,1 bis 2 mm extrudiert und kann durch Glätten auf einem Walzenglättwerk mit Walzentemperaturen von 50 bis 100 Grad C zu einer Folie mit einer Dicke von 0,1 bis 1 mm, verarbeitet werden. Die Walzenoberflächen des Walzenglättwerkes können, wie herkömmlich, glatt und hochglänzend sein, man erhält trotzdem eine hochtransparente Folie mit matter Oberfläche. Bevorzugt sollte jedoch die Folie im Chill-Rollverfahren hergestellt werden. Dabei kommt nur eine Oberfläche der Schmelzebahn in Kontakt zu der auf Temperaturen von 20 bis 110 Grad C gekühlten Walze. Die Schmelze wird dabei nicht wie im Glättwerk durch eine Gegenwalze auf die Oberfläche aufgepreßt, so daß die aus der Schmelzeoberfläche herausragenden Kugelkalotten der eingelagerten Teilchen B nicht wieder in die Matrix des Polymerisats A zurückgepreßt werden. Damit erhält man trotz hochglanzpolierter Oberflächen der Chill-Rollwalze auf beiden Oberflächen der erstarrten Bahn annähernd gleiche Rauheitswerte R gemessen nach DIN 4768, die je nach Durchmesser der Teilchen B $R_a$-Werte zwischen 0,01 und 50 µm, $R_z$-Werte zwischen 0,08 und 100 pm und $R_{max}$-Werte zwischen 0,1 und 150 µm annehmen können. Mit diesem Verfahren können Folien im Dickenbereich von 0,5 bis 0,02, besonders bevorzugt von 0,05 bis 0,2 mm, hergestellt werden.

Das oben beschriebene dreistufige Verfahren zur Herstellung der Folie:

1) Herstellung des Granulats aus Polymerisat A
2) Herstellung des Granulats aus Polymerisat A mit eingelagerten Teilchen aus Polymerisat B
3) Extrusion der Folie

kann in weiteren Ausführungsformen auch zweistufig durchgeführt werden. Hierbei werden die Stufen 2) und 3) des obigen Verfahrens zusammengefaßt, wobei der Folienextruder gleichzeitig als Mischextruder zum Mischen der Polymerisate A und B benutzt wird.

Eigenschaften der Folie

Eine solchermaßen hergestellte Folie ist witterungsbeständig, weist einen geringen Weißbruch beim Knicken oder Falten auf, ist in ihrer Zähigkeit unempfindlich gegen Kälte und Wärme und zeigt keine oder nur eine sehr geringfügige Vergilbung nach den vorhergegangenen thermoplastischen Verarbeitungsschritten. Die Oberfläche der Folie ist matt bei gleichzeitiger hoher Transparenz der Folie. Eine besonders bevorzugte Ausführungsform beinhaltet Folien mit UV-absorbierenden Substanzen, die vorzugsweise in der Hartphase al) des thermoplastischen Polymerisats A eingelagert sind. Hierdurch wirkt die Folie zusätzlich als UV-Filter und damit als effektiver Schutz für Substrate, die sich bei UV-Bestrahlung labil verhalten, d.h. z.B. nach einer bestimmten Zeit Verfärbungen oder ein Nachlassen der mechanischen Eigenschaften aufweisen.

Die Folie wird, wenn erforderlich, durch Kaschieren bei Temperaturen von 90 bis 160 Grad C in plastischem Zustand (bezogen auf Polymerisat A) unter Druck im Spalt eines Walzenpaares, das an der Walzenoberfläche Temperaturen von 80 bis 140 Grad C aufweist, auf das Substrat gebracht. Bei Substraten, die komplizierte Oberflächengeometrien aufweisen und damit dem oben genannten Kaschierverfahren nicht zugänglich sind, kann ein Preß- oder Tiefziehverfahren angewendet werden. In allen Fällen behält eine solchermaßen behandelte Folie ihre matte Oberfläche bei.

Ebenfalls können Folie und Substrat mit Reaktions-, Lösungsmittel- oder thermischen Klebern verbunden werden. Als Substrate finden beispielsweise Verwendung:

- Platten, Wellplatten, Stegdoppelplatten und andere Profile aus witterungslabilen Kunststoffen, wie PVC, Polyester oder Polycarbonat
- Hölzer und Papiere
- Stahl- und Aluminiumplatten, wie z.B. Garagentore, Fahrzeuge, Container und Verkehrsschilder
- Bilderabdeckungen,

wobei diese Aufzählung nicht erschöpfend ist. Die matte Oberfläche der Folie hat hierbei hervorragende Antireflex-Eigenschaften.

Die folgenden Beispiele sollen zur weiteren Erläuterung der Erfindung dienen.

BEISPIEL

1. Herstellung des Polymerisats A

Eine 60 %ige Emulsion I wurde hergestellt durch Emulgieren von:

| | |
|---|---|
| 99 Gew.-Teilen | Butylacrylat |
| 1 Gew.-Teil | Triallylcyanurat |
| 0,12 Gew.-Teilen | tert.-Butylhydroperoxid |
| in 67 Gew.-Teilen | einer 0,15 %igen wäßrigen Lösung von Natriumlaurylsulfat |

Eine 50 %ige Emulsion II wurde hergestellt durch Emulgieren von:

| | |
|---|---|
| 89,35 Gew.-Teilen | Methylmethacrylat |
| 7,75 Gew.-Teilen | Butylacrylat |
| 2,9 Gew.-Teilen | 2-(2'-Hydroxyphenyl)-5-methacrylamidobenzotriazol |
| 0,775 Gew.-Teilen | Dodecylmercaptan |

| 0,15 Gew.-Teilen | Octadecyl-3-(3,5-di-tert.-butyl-4-hydroxyphenyl)-propionat |
| 0,1 Gew.-Teilen | tert.-Butylhydroperoxid |
| in 100,0 Gew.-Teilen | einer 0,06 %igen wäßrigen Lösung von Natriumlaurylsulfat |

In einem Polymerisationsgefäß mit Rührer, Außenkühlung und Zulaufgefäß wurden 60 Gew.-Teile einer Wasserphase vorgelegt, die 1 Gew.-% Natrium-Laurylsulfat, 0,15 Gew.-% Natriumhydroxymethylsulfinat, 0,02 Gew.-% Essigsäure und 0,008 Gew.-% Eisen-II-sulfat enthielt. Innerhalb von 2 Stunden wurden unter Rühren bei einer Temperatur von 55 Grad C 50 Gew.-Teile der Emulsion I zudosiert. Das entstehende Zähphasenpolymerisat hatte eine Glastemperatur von -35 Grad C. Anschließend wurden während weiterer 2 Stunden 140 Gew.-Teile der Emulsion II zudosiert, wobei das Hartphasenpolymerisat mit einer Glasübergangstemperatur von 90 Grad C gebildet wurde. Durch Löslichkeitsmessungen an einer koagulierten Polymerisatprobe wurde festgestellt, daß 25 Gew.-% der Hartphase an die Zähphase gebunden sind.

Zur Gewinnung des Feststoffes aus der erhaltenen Dispersion wurde ein dicht kämmender, gegenläufiger Doppelschneckenextruder mit einem Schneckendurchmesser von D = 30 mm verwendet. Die Koagulation der Dispersion wurde durch die gemeinsame Einwirkung von Wärme und Scherung bewirkt. Der aus dem Extruder austretende Strang bestehend aus Polymerisat A wurde gekühlt und nach dem Erstarren granuliert. Eine genaue Beschreibung des Extruderaufbaus wird in DE-A 38 42 796 gegeben. Der Brechungsindex des Polymerisats A, gemessen nach DIN 53 491, betrug $n_{D,A} = 1,492$.

2. Herstellung des Polymerisats B

In einem Polymerisationsgefäß mit Rührer, Außenkühlung und Zulaufgefäß wurden 1 200 Gew.-Teile vollentsalztes Wasser vorgelegt und auf 80 Grad C erhitzt. Anschließend wurden 6 Gew.-Teile Ammoniumperoxidisulfat und 5 Gew.-Teile einer Mischung M bestehend aus 47,5 Gew.-% Methylmethacrylat, 47,5 Gew.-% Isobutylmethacrylat und 5 Gew.-% Glykoldimethacrylat zugegeben. Nach 5 Minuten wurden innerhalb von 1 Stunde weitere 295 Gew.-Teile der Mischung M zugetropft. Nach Ende des Zulaufs wurde 1 Stunde bei 80 Grad C gerührt, dann abgekühlt und über ein VA-Siebgewebe abfiltriert. Die erhaltene Dispersion I war koagulatfrei und hatte einen Feststoffgehalt von 20 Gew.-%. Der mittlere Teilchendurchmesser betrug ca. 0,65 um. In einer 2. Stufe wurden in einem Polymerisationsgefäß 280 Gew.-Teile vollentsalztes Wasser und 5,5 Gew.-Teile der oben beschriebenen Dispersion I vorgelegt und auf 80 Grad C erhitzt. Anschließend wurden 0,18 Gew.-Teile Ammoniumperoxidisulfat und eine Emulsion bestehend aus 215 Teilen Methylmethacrylat, 215 Teilen Isobutylmethacrylat, 23 Teilen Glykoldimethacrylat, 800 Teilen vollentsalztem Wasser, 0,68 Teilen Natriumlaurylsulfat und 1,6 Teilen Ammoniumperoxidisulfat während 4 Stunden zugetropft. Nach Zulaufende wurde 1 Stunde und nach Zugabe von 0,45 Teilen Ammoniumperoxidisulfat eine weitere Stunde bei 80 Grad C endpolymerisiert. Die erhaltene Dispersion war koagulatfrei und hatte einen Feststoffgehalt von 30 Gew.-%. Das pulverförmige Polymerisat B wurde durch Sprühtrocknung gewonnen. Der mittlere Teilchendurchmesser der Latexpartikel, die teilweise oder vollständig zu größeren Partikeln locker aggregiert sein können, betrug ca. 3,0 um. Der Brechungsindex des Polymerisats B wurde aus den Inkrementen der Polymerbausteinen nach Brandrup, Immergut, Polymer Handbook, 3. Aufl, Kap. VI, S. 451, Wiley Interscience, New York zu $n_D^{20} = 1,485$ berechnet.

3. Herstellung des Gemischs aus Polymerisat A und Polymerisat B.

Das granulierte Polymerisat A gemäß 1 und das pulverförmige Polymerisat B gemäß 2 wurden im Verhältnis A : B = 80 : 20 Gew.-Teilen mit Hilfe eines Doppelschneckenextruders gemischt und über eine Granulierdüse zu Strängen ausgetragen. In einem nachgeschalteten Granulator wurden die Stränge zu Granulatkörnern zerteilt.

4. Herstellung der Folie

Das nach 3 erzeugte Granulat wurde in einem Einschneckenextruder erneut plastifiziert und durch eine Breitschlitzdüse mit einer Temperatur von 240 Grad C zu einem dünnen Schmelzfilm ausgepreßt. Unmittelbar nach dem Verlassen der Düse wurde der Schmelzfilm auf die mit 90 Grad C temperierte Chill-Rollwalze gelegt. Die Walze zog die Schmelze vom Düsenmund ab und diese kühlte unter ihre Glastemperatur ab. Die erstarrte Folienbahn wurde über nachgeschaltete Umlaufwalzen einem Folienwickler zugeführt.

5. Eigenschaften der Folie

Die nach 4 hergestellte Folie besitzt bei einer Dicke von 80 um eine Lichttransmission von > 87 % (DIN 5033/5036, Lichtart D 65/10).

Weil die Schmelze nach Austritt aus der Düse nicht durch einen Walzenglattspalt geführt wurde, besitzen beide Oberflächen der Folie nahezu gleiche Oberflächenrauheiten. Nach DIN 4768 werden Rauheitswerte $R_a = 0,3 \, \mu m$, $R_z = 1,7 \, \mu m$ und $R_{max} = 2,2 \, \mu m$ gemessen.

Eine optische Charakterisierung der Oberfläche ergibt Reflektometerwerte nach DIN 5033/5036, Einfallswinkel bei 20 Grad von 3 bis 3,5, bei 60 Grad von 18 bis 20 und bei 85 Grad von 55 bis 69.

**Patentansprüche**

1. Mattierte Polymethacrylat-Folie enthaltend 99,9 bis 30 Gew.-% thermoplastischer Polymerisat-Matrix A bestehend aus:

   a1)   10 bis 95 Gew.-% einer zusammenhängenden Hartphase mit einer Glastemperatur über 70 Grad C, aufgebaut aus

   a11)   80 bis 100 Gew.-% (bezogen auf a1) Methylmethacrylat und
   a12)   0 bis 20 Gew.-% eines oder mehrerer weiterer ethylenisch ungesättigter, radikalisch polymerisierbarer Monomerer, und

   a2)   90 bis 5 Gew.-% einer in der Hartphase vorteilten Zähphase mit einer Glastemperatur unter -10 Grad C, aufgebaut aus

   a21)   50 bis 99,5 Gew.-% eines $C_1$-$C_{10}$-Alkylacrylats (bezogen auf a2)
   a22)   0,5 bis 5 Gew.-% eines vernetzenden Monomeren mit zwei oder mehr ethylenisch ungesättigten, radikalisch polymerisierbaren Resten, und
   a23)   gegebenenfalls weiteren ethylenisch ungesättigten, radikalisch polymerisierbaren Monomeren,

   wobei wenigstens 15 Gew.-% der Hartphase a1) mit der Zähphase a2) kovalent verknüpft sind,
   dadurch gekennzeichnet, daß die Folie zur Mattierung weiterhin 0,1 bis 70 Gew.-% heterogen in dem thermoplastischen Matrixpolymerisat A verteilte Latexpartikel mit einem mittleren Teilchendurchmesser von 1 bis 150 $\mu m$ bestehend aus einem thermoplastischen Polymerisat B, aufgebaut aus:

   b1)   50 - 99,5 Gew.-% (bezogen auf B) eines $C_1$-$C_6$-Alkylmethacrylats,
   b2)   0,5 bis 10 Gew.-% eines vernetzenden Monomeren mit zwei oder mehr ethylenisch ungesättigten, radikalisch polymerisierbaren Gruppen, und
   b3)   gegebenenfalls weiteren ethylenisch ungesättigten radikalisch polymerisierbaren Monomeren

   enthält, und daß der Unterschied zwischen dem Brechungsindex $n_{D,A}$ des thermoplastischen Matrixpolymerisats A und dem Brechungsindex $n_{D,B}$ der heterogen verteilten Latexpartikel bestehend aus Polymerisat B maximal 0,02 beträgt.

2. Polymethacrylat-Folie nach Anspruch 1, dadurch gekennzeichnet, daß die Komponente a22) des Polymerisats A 0,5 bis 5 Gew.-% Pfropfvernetzer (bezogen auf a2) enthält.

3. Polymethacrylat-Folie nach einem oder mehreren der Ansprüche 1 - 2, dadurch gekennzeichnet, daß die Hartphase a1) des Polymerisats A 0,1 bis 10 Gew.-% eines niedermolekularen UV-Absorbers enthält.

4. Polymethacrylat-Folie nach einem oder mehreren der Ansprüche 1 - 3, dadurch gekennzeichnet, daß die Hartphase a1) des Polymerisats A 0,1 bis 10 Gew.-% eines polymer gebundenen UV-Absorbers enthält.

5. Polymethacrylat-Folie nach einem oder mehreren der Ansprüche 1 - 4, dadurch gekennzeichnet, daß die Folie eine Dicke von 0,01 bis 1 mm aufweist und daß die heterogen verteilten Latexpartikel bestehend aus Polymerisat B einen Durchmesser von maximal einem Fünftel der Foliendicke, besitzen.

6. Verfahren zur Herstellung einer Polymethacrylat-Folie nach einem oder mehreren der Ansprüche 1 - 5, dadurch gekennzeichnet, daß die bei der Folienextrusion verwendete Chill-Rollwalze eine hochglanzpolierte Oberfläche aufweist.

7. Verfahren zur Beschichtung eines Gegenstands mit einer Polymethacrylat-Folie nach einem oder mehreren der

EP 0 528 196 B1

Ansprüche 1 - 6, dadurch gekennzeichnet, daß die Folie durch Kaschieren und/oder Verkleben mit dem Gegenstand fest verbunden wird.

8. Verfahren zur Beschichtung eines Gegenstands nach Anspruch 7. dadurch gekennzeichnet, daß der Gegenstand aus einem witterungsempfindlichen Material besteht.

9. Verfahren zur Beschichtung eines Gegenstands nach Anspruch 7, dadurch gekennzeichnet, daß der Gegenstand aus Kunststoff besteht.

## Claims

1. Matted polymethacrylate film comprising 99.9 to 30 wt.% of thermoplastic polymer matrix A comprising:

   a1) 10 to 95 wt.% of a cohesive hard phase with a glass transition temperature of above 70°C, synthesised from

       a11) 80 to 100 wt.% (based on al) of methylmethacrylate and
       a12) 0 to 20 wt.% of one or more further ethylenically unsaturated, radically polymerisable monomers, and

   a2) 90 to 5 wt.% of a viscous phase, which is distributed in the hard phase, has a glass transition temperature of below -10°C, and is synthesised from

       a21) 50 to 99.5 wt.% of a $C_1$-$C_{10}$-alkylacrylate (based on a2)
       a22) 0.5 to 5 wt.% of a cross-linking monomer having 2 or more ethylenically unsaturated, radically polymerisable groups, and
       a23) optionally further ethylenically unsaturated, radically polymerisable monomers,

   at least 15 wt.% of the hard phase a1) being covalently bonded to the viscous phase a2), characterised in that the film, for the purpose of matting, further contains 0.1 to 70 wt.% of latex particles with an average particle diameter of 1 to 150 $\mu$m, distributed heterogeneously in the thermoplastic matrix polymer A and comprising a thermoplastic polymer B synthesised from

   b1) 50 - 99.5 wt.% (based on B) of a $C_1$-$C_6$-alkylmethacrylate,
   b2) 0.5 to 10 wt.% of a cross-linking monomer having two or more ethylenically unsaturated radically polymerisable groups, and
   b3) optionally further ethylenically unsaturated, radically polymerisable monomers,
   and that the difference between the refractive index $n_{D,A}$ of the thermoplastic matrix polymer A and the refractive index $n_{D,B}$ of the heterogeneously distributed latex particles comprising polymer B is, at most, 0.02.

2. A polymethacrylate film according to claim 1, characterised in that the component a22) of the polymer A contains 0.5 to 5 wt.% of a graft cross-linking agent (based on a2).

3. A polymethacrylate film according to one or more of claims 1 to 2, characterised in that the hard phase a1) of the polymer A contains 0.1 to 10 wt.% of a low molecular ultraviolet absorber.

4. A polymethacrylate film according to one or more of claims 1 to 3, characterised in that the hard phase a1) of the polymer A, contains 0.1 to 10 wt.% of a polymerbound ultraviolet absorber.

5. A polymethacrylate film according to one or more of claims 1 to 4, characterised in that the film has a thickness of 0.01 to 1 mm, and that the heterogeneously distributed latex particles made of polymer B, have a diameter of at most a fifth of the film thickness.

6. A process for preparing a polymethacrylate film, according to one or more of claims 1 to 5, characterised in that a movable chill roller used in the film extrusion has a high-lustre polished surface.

7. A process for coating an article with a polymethacrylate film according to one or more of claims 1 to 6, characterised in that the film is firmly connected to the article by means of lamination coating and/or bonding.

8. A process for coating an article according to claim 7, characterised in that the article is made of a material which is sensitive to weathering.

9. A process for coating an article according to claim 7, characterised in that the article is made of plastic.

**Revendications**

1. Feuille mate de polyméthacrylate, contenant 99,9 à 30% en poids d'une matrice de polymère thermoplastique A se composant de:

   a1) 10 à 95% en poids d'une phase dure cohérente ayant une température de transition vitreuse supérieure à 70°C, composée de

      a11) 80 à 100% en poids (par rapport à a1) de méthacrylate de méthyle et
      a12) 0 à 20% en poids d'un ou de plusieurs autres monomères à insaturation éthylénique susceptibles de polymérisation radicalaire, et

   a2) 90 à 5% en poids d'une phase visqueuse répartie dans la phase dure, ayant une température de transition vitreuse inférieure à -10°C, composée de

      a21) 50 à 99,5% en poids (par rapport à a2) d'un acrylate d'alkyle en $C_1$-$C_{10}$,
      a22) 0,5 à 5% en poids d'un monomère réticulant, comportant au moins deux restes à insaturation éthylénique susceptibles de polymérisation radicalaire, et
      a23) éventuellement d'autres monomères à insaturation éthylénique susceptibles de polymérisation radicalaire,

   15% en poids au moins de la phase dure a1) étant reliés par liaison covalente à la phase visqueuse a2), caractérisée en ce qu'elle contient en outre, pour la rendre mate, 0,1 à 70% en poids de particules de latex ayant un diamètre moyen de particules de 1 à 150 μm, réparties de façon hétérogène dans le polymère de matrice thermoplastique A, se composant d'un polymère thermoplastique B composé de

   b1) 50 à 99,5% en poids (par rapport à B) d'un méthacrylate d'alkyle en $C_1$-$C_6$,
   b2) 0,5 à 10% en poids d'un monomère réticulant, comportant au moins deux groupements à insaturation éthylénique susceptibles de polymérisation radicalaire, et
   b3) éventuellement d'autres monomères à insaturation éthylénique susceptibles de polymérisation radicalaire,

   et en ce que la différence entre l'indice de réfraction $n_{D,A}$ du polymère de matrice thermoplastique A et l'indice de réfraction $n_{D,B}$ des particules de latex réparties de façon hétérogène, composées de polymère B, s'élève au maximum à 0,02.

2. Feuille de polyméthacrylate selon la revendication 1, caractérisée en ce que le composant a22) du polymère A contient 0,5 à 5% en poids (par rapport à a2) de réticulant greffé.

3. Feuille de polyméthacrylate selon la revendication 1 ou 2, caractérisée en ce que la phase dure a1) du polymère A contient 0,1 à 10% en poids d'un absorbant d'UV de bas poids moléculaire.

4. Feuille de polyméthacrylate selon l'une quelconque des revendications 1 à 3, caractérisée en ce que la phase dure a1) du polymère A contient 0,1 à 10% en poids d'un absorbant d'UV en liaison polymère.

5. Feuille de polyméthacrylate selon l'une quelconque des revendications 1 à 4, caractérisée en ce qu'elle présente une épaisseur de 0,01 à 1 mm et en ce que les particules de latex de polymère B, réparties de façon hétérogène, ont un diamètre d'un cinquième au maximum de l'épaisseur de la feuille.

6. Procédé de fabrication d'une feuille de polyméthacrylate selon l'une quelconque des revendications 1 à 5, caractérisé en ce que le rouleau refroidisseur utilisé dans l'extrusion en feuille présente une surface à poli spéculaire.

7. Procédé de revêtement d'un objet avec une feuille de polyméthacrylate selon l'une quelconque des revendications 1 à 6, caractérisé en ce que la feuille est fixée solidement à l'objet par doublage et/ou collage.

8. Procédé de revêtement d'un objet selon la revendication 7, caractérisé en ce que l'objet est en une matière sensible aux intempéries.

9. Procédé de revêtement d'un objet selon la revendication 7, caractérisé en ce que l'objet est en matière plastique.